# FASCICULE DE BREVET EUROPEEN

(11) **EP 1 471 714 B1**
(45) Date de publication et mention de la délivrance du brevet: **10.08.2011**
(21) Numéro de dépôt: 04290504.2
(22) Date de dépôt: 25.02.2004
(51) Int. Cl.: H04L 29/12

(54) **Procédé et système de redirection sur détection d'erreur de résolution DNS**
Verfahren und System zur Umleitung bei Detektion eines DNS-Auflösungsfehlers
Method and system for redirection on detecting an error in the DNS resolution

(30) Priorité: 25.04.2003 FR 0305128
(43) Date de publication de la demande: 27.10.2004
(73) Titulaire: FRANCE TELECOM, 75015 Paris (FR)
(72) Inventeur: Mittig, Karel, 14000 Caen (FR)
(74) Mandataire: Joly, Jean-Jacques

(56) Documents cités:
- US-A- 5 751 961
- US-A1- 2002 059 396

## Description

La présente invention concerne d'une manière générale l'accès à des contenus ou des services diffusés par des serveurs Web par l'intermédiaire d'un réseau public de transmission de données, basé sur le protocole IP (Internet Protocol).

Elle s'applique notamment, mais non exclusivement au réseau Internet.

Toutes les entités connectées à un réseau IP sont identifiées les unes par rapport aux autres à l'aide d'une adresse respective dite IP constituée d'une séquence de quatre nombres de 0 à 255. Il s'est avéré que de telles adresses sont difficilement manipulables et mémorisables. C'est la raison pour laquelle on a mis en place le protocole DNS (Domain Name System) qui offre un système mnémotechnique simple pour retrouver une entité connectée au réseau Internet. Ce protocole est utilisé par la plupart des protocoles applicatifs utilisés dans le réseau Internet : HTTP (HyperText Transfer Protocol), mail, streaming, etc

Conformément au protocole DNS, chaque entité connectée au réseau se voit attribuer un nom de serveur DNS se présentant sous la forme d'une chaîne de caractères conforme au standard RFC 1034, telle que "www.nom_de_domaine.fr" ou "nom_de_domaine.fr", ce nom étant introduit dans une adresse URL (Uniform Resource Locator) dans le champ d'introduction d'adresse d'un logiciel de navigation Internet de type Web ou WAP (Wireless Application Protocol) pour accéder au site Web de l'entité. Une adresse URL est constituée d'une référence au protocole utilisé (http://, ftp://, ...), suivie d'un identifiant du serveur demandé (adresse IP ou nom du serveur), suivi d'un identifiant de la ressource demandée (par exemple /index.html).

Les logiciels de navigation sont conçus pour effectuer ce que l'on appelle une résolution DNS consistant à émettre une requête contenant le nom du serveur demandé par l'utilisateur, à destination d'un serveur DNS qui répond à cette requête en fournissant l'adresse IP correspondante. Le logiciel de navigation peut alors accéder au site recherché à l'aide de l'adresse IP reçue.

Deux cas d'erreur peuvent se produire durant un accès à un site Web. Si le nom du serveur demandé n'existe pas, le serveur DNS répond à la requête en envoyant un message d'erreur DNS au logiciel de navigation. Si le serveur HTTP du site demandé existe mais n'est pas disponible ou si le contenu demandé au serveur HTTP n'existe pas, le serveur HTTP délivre un message d'erreur HTTP au logiciel de navigation.

Dans ce contexte, l'invention vise à fournir à l'utilisateur un service de redirection dans le cas où le serveur DNS ne trouve pas d'adresse IP correspondant au nom du serveur, introduit par l'utilisateur.

Actuellement, certains logiciels de navigation sont conçus pour traiter les erreurs de résolution DNS en établissant automatiquement en cas d'erreur une connexion avec un moteur de recherche prédéfini. Dans certains cas, les mots contenus dans l'adresse URL introduite par l'utilisateur sont transmis directement au moteur de recherche.

Cette solution présente les inconvénients suivants. Elle nécessite tout d'abord que le logiciel de navigation installé sur le terminal de l'utilisateur soit conçu pour gérer les erreurs de résolution DNS, ce qui est loin d'être le cas de tous les logiciels de navigation, compte tenu du fait que l'utilisateur peut maintenant accéder au réseau Internet à l'aide de terminaux très divers (PC, terminal mobile, ...). Il en résulte qu'elle impose à l'utilisateur le choix du logiciel de navigation à employer. Le choix du moteur de recherche est également imposé par le logiciel de navigation choisi. En outre, la connexion directe de l'utilisateur à un site n'est dans la plupart des cas pas réalisée, l'utilisateur étant généralement orienté vers un site portail dans lequel il doit introduire des critères de recherche.

Le document US 2002/059396 décrit un système comportant un détecteur d'erreurs interposé entre un terminal de client et un serveur et qui analyse les requêtes émises par le client pour y détecter des erreurs. Si une erreur est détectée, le détecteur d'erreurs recherche des adresses alternatives dans une base de données.

La présente invention a pour but de supprimer ces inconvénients. Cet objectif est atteint par la prévision d'un procédé de traitement de requêtes de résolution de nom de serveur, émises par des terminaux d'utilisateurs pour accéder à un serveur par l'intermédiaire d'un réseau de transmission de données basé sur le protocole IP, les requêtes de résolution contenant un nom de serveur, et visant à obtenir d'un serveur de résolution une adresse IP correspondante permettant d'accéder au serveur.

Selon l'invention, ce procédé comprend les étapes consistant à :
- intercepter des requêtes de résolution émises par des terminaux d'utilisateurs, et les réémettre vers le serveur de résolution,
- recevoir et analyser des réponses aux requêtes de résolution, fournies par le serveur de résolution, et
- lorsque l'une des réponses aux requêtes de résolution indique qu'aucune adresse IP ne correspond au nom de serveur fournie dans la requête correspondante, rechercher dans au moins une liste en fonction d'au moins une partie du nom de serveur contenu dans la requête de résolution, une adresse d'un serveur alternatif,
caractérisé en ce que, si au moins une adresse de serveur alternatif est trouvée dans une liste, ce procédé comprend en outre les étapes consistant à:
- transmettre au terminal l'adresse IP d'un serveur HTTP,
- en réponse, recevoir en provenance du terminal une requête d'accès au serveur HTTP,
- rechercher par le serveur HTTP l'adresse URL de serveur alternatif préalablement trouvée, et
- transmettre en réponse au terminal l'adresse URL de serveur alternatif trouvée afin d'effectuer une résolution DNS à partir de ladite adresse URL transmise.

Avantageusement, les réponses aux requêtes de résolution contenant une adresse IP sont transmises sans traitement aux terminaux d'utilisateurs.

Selon une particularité de l'invention, l'une des listes où sont recherchées des adresses de serveurs alternatifs met en correspondance des mots clés et des adresses de serveurs alternatifs, une adresse de serveur alternatif étant sélectionnée si le mot clé correspondant se trouve dans le nom de serveur fourni dans la requête.

Selon une autre particularité de l'invention, l'une des listes où sont recherchées des adresses de serveurs alternatifs met en correspondance des parties de mots et des adresses de serveurs alternatifs, une adresse de serveur alternatif étant sélectionnée si la partie de mot correspondante se trouve dans l'adresse de serveur fournie dans la requête.

Selon encore une autre particularité de l'invention, l'étape de recherche dans au moins une liste comprend l'émission d'une requête de recherche vers un moteur de recherche, contenant un critère défini sur la base du nom de serveur fourni dans la requête de résolution.

Selon encore une autre particularité de l'invention, les adresses figurant dans la liste de serveurs alternatifs sont des noms de serveurs, le procédé comprenant en outre des étapes d'émission d'une requête de résolution incluant le nom du serveur alternatif trouvé, de réception de la réponse correspondante, et de transmission de cette réponse au terminal d'utilisateur émetteur de la requête initiale.

Avantageusement, l'adresse de serveur alternatif trouvée inclut la définition d'un sous-répertoire permettant d'accéder directement à une ressource spécifique fournie par le serveur alternatif.

Selon encore une autre particularité de l'invention, la page Web diffusée par le serveur alternatif est une page de résultats de recherche fournie par un moteur de recherche accessible par le réseau.

L'invention concerne également un système de traitement de requêtes de résolution de nom de serveur, émises par des terminaux d'utilisateurs pour accéder à un serveur par l'intermédiaire d'un réseau de transmission de données basé sur le protocole IP, les requêtes de résolution comportant un nom de serveur, et visant à obtenir d'un serveur de résolution une adresse IP correspondante permettant d'accéder au serveur.

Selon l'invention, ce système comprend:
- des moyens pour recevoir des terminaux d'utilisateurs des requêtes de résolution émises par des terminaux d'utilisateurs, et les réémettre vers le serveur de résolution,
- des moyens pour recevoir et analyser des réponses aux requêtes de résolution, fournies par le serveur de résolution, et
- des moyens pour rechercher dans au moins une liste en fonction d'au moins une partie du nom de serveur contenu dans la requête de résolution, une adresse d'un serveur alternatif, lorsque l'une des réponses aux requêtes de résolution indique qu'aucune adresse IP ne correspond au nom de serveur fourni dans la requête correspondante,
caractérisé en ce qu'il comprend en outre :
- un serveur HTTP,
- des moyens pour transmettre au terminal l'adresse IP du serveur HTTP si au moins une adresse de serveur alternatif est trouvée dans une liste,
- des moyens pour rechercher l'adresse de serveur alternatif préalablement trouvée, à la suite de la réception d'une requête d'accès au serveur HTTP émise par le terminal, et
- des moyens pour transmettre l'adresse de serveur alternatif trouvée au terminal afin d'effectuer une résolution DNS à partir de ladite adresse URL transmise.

Avantageusement, ce système est conçu sous la forme d'un serveur DNS.

Alternativement, ce système est intégré dans un serveur proxy.

De préférence, ce système comprend une mémoire cache pour stocker temporairement les réponses reçues aux requêtes de résolution.

Selon une particularité de l'invention, l'une des listes d'adresses de serveurs alternatifs met en correspondance des mots clés et des adresses de serveurs alternatifs, une adresse de serveur alternatif étant sélectionnée si le mot clé correspondant se trouve dans le nom de serveur fourni dans la requête de résolution.

Selon une autre particularité de l'invention, l'une des listes d'adresses de serveurs alternatifs met en correspondance des parties de mots et des adresses de serveurs alternatifs, une adresse de serveur alternatif étant sélectionnée si la partie de mot correspondante se trouve dans le nom de serveur fourni dans la requête de résolution,

Selon encore une autre particularité de l'invention, ce système comprend des moyens pour émettre une requête de recherche vers un moteur de recherche, contenant un critère défini sur la base du nom de serveur fourni dans la requête de résolution.

Selon encore une autre particularité de l'invention, l'adresse URL de serveur alternatif trouvée inclut la définition d'un sous-répertoire permettant d'accéder directement à une ressource spécifique fournie par le serveur alternatif.

Un mode de réalisation préféré de l'invention sera décrit ci-après, à titre d'exemple non limitatif, avec référence aux dessins annexés dans lesquels:
La figure 1 représente schématiquement un système illustrant le fonctionnement général du processus de résolution DNS;
La figure 2 représente un système de redirection selon l'intention
La figure 3 illustre sous la forme d'un organigramme un procédé selon l'invention mis en oeuvre par le système représenté sur la figure 2;
La figure 4 représente une variante du système de redirection montré sur la figure 2;
Les figures 5 et 6 illustrent sous la forme d'organigrammes un procédé selon l'invention mis en oeuvre par le système représenté sur la figure 4.

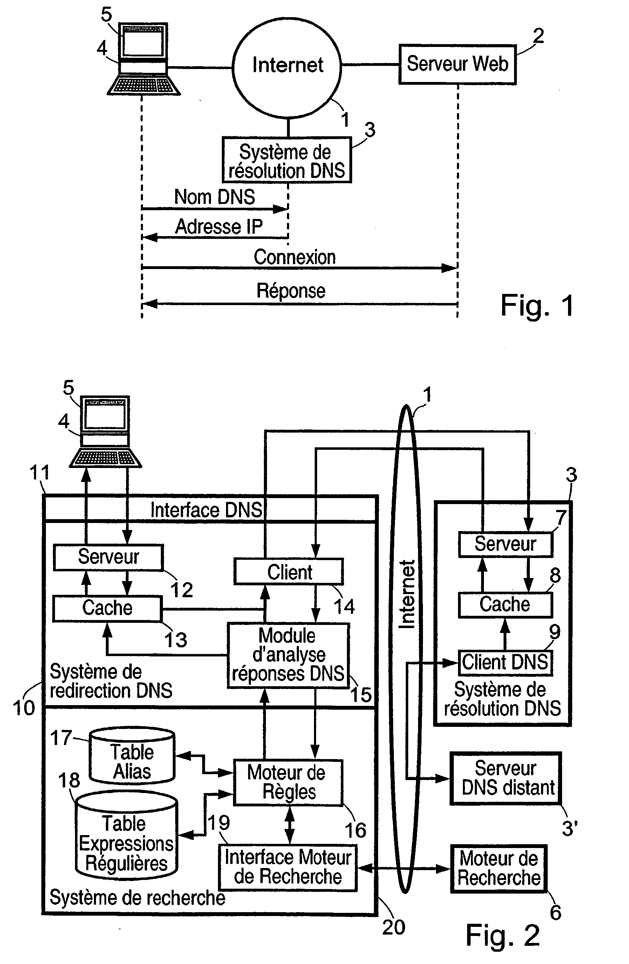

Pour illustrer le fonctionnement général du processus de résolution DNS, la figure 1 représente un réseau de transmission de données 1 tel que le réseau Internet auxquels sont connectés un serveur HTTP 2 et un terminal d'utilisateur 4 comportant un écran d'affichage sur laquelle est affiché une fenêtre 5 d'un logiciel de navigation Internet.

Lorsque l'utilisateur introduit et valide une adresse URL dans le champ de saisie d'adresse de la fenêtre 5 du logiciel de navigation, ce dernier émet une requête contenant le nom de serveur extrait de l'adresse URL introduite, à destination d'un serveur DNS 3 connecté au réseau Internet. Le serveur DNS consulte des tables de correspondance de noms de serveurs et d'adresses IP, et si le nom de serveur contenu dans la requête est reconnu, le serveur DNS 3 répond au terminal 4 en lui fournissant l'adresse IP correspondante. Le logiciel de navigation exécuté par le terminal peut alors accéder au serveur Web 2 ainsi identifié, en émettant une requête HTTP avec l'adresse IP reçue du serveur DNS 3 et ainsi obtenir une réponse du serveur 2 afin d'accéder au contenu ou au service offert.

Pour assurer un service de redirection indépendant du logiciel de navigation installé sur le terminal de l'utilisateur, le système selon l'invention tel que représenté sur la figure 2 comprend un système de redirection DNS 10 conçu pour recevoir les requêtes de résolution DNS émises par les terminaux d'utilisateurs 4 ayant accès au système de redirection DNS 10.

Le système de redirection DNS 10 peut être intégré à un serveur proxy mis en oeuvre par exemple par un fournisseur d'accès Internet. Il peut également être conçu sous la forme d'un serveur DNS accessible par le réseau Internet 1.

Sur la figure 2, le système de redirection 10 comprend un serveur 12 conçu pour recevoir les requêtes DNS émises par les terminaux d'utilisateurs, et leur transmettre les réponses DNS correspondantes, et un client 14 conçu pour émettre des requêtes DNS et recevoir les réponses DNS correspondantes d'un serveur DNS 3. Le système 10 peut également comprendre une mémoire cache 13 permettant de stocker temporairement les réponses DNS correspondant aux requêtes DNS émises par les terminaux d'utilisateurs, pour éviter de répéter des résolutions DNS effectuées peu de temps auparavant.

Cette architecture se retrouve également dans un système de résolution DNS 3 classique qui comprend :
- un serveur DNS 7 conçu pour recevoir les requêtes de résolution DNS, et les traiter, et transmettre les réponses correspondantes, et
- une mémoire cache 8 pour stocker temporairement les requêtes DNS et les réponses correspondantes, pour éviter de répéter les traitements de résolution sur des requêtes identiques traitées peu de temps auparavant.

Le système de résolution DNS 3 peut également comprendre un client DNS 9 pour transmettre vers un autre système de résolution DNS 3' les requêtes non résolues par le système 3, et en recevoir les réponses.

Selon l'invention, le système de redirection 10 comprend également un module d'analyse 15 des réponses DNS pour analyser les réponses en vue de détecter les erreurs DNS. Les réponses DNS non erronées sont transmises directement à la mémoire cache 13, puis au serveur 12 à destination du terminal d'utilisateur émetteur de la requête correspondante, tandis que les réponses erronées sont traitées par le module d'analyse 15.

De cette manière, le système de redirection 10 selon l'invention est complètement transparent à l'utilisateur lorsque la résolution DNS s'effectue correctement.

Pour traiter les erreurs de résolution DNS, le système de redirection est associé à un système de recherche 20 comprenant un moteur de règles 16 ayant accès à des moyens de recherche permettant d'obtenir un nom de serveur à partir d'un nom de serveur non résolu, reçu dans la requête DNS. Ces moyens de recherche peuvent ainsi comprendre une interface de moteur de recherche 19, et/ou une table d'alias 17 et/ou une table d'expressions régulières 18.

S'il est relié à une interface de moteur de recherche 19, le moteur de règles 16 est conçu pour extraire de la requête DNS non résolue le nom de serveur recherché par l'utilisateur et définir à partir de ce nom des critères de recherche qui sont passés en paramètre à l'interface de moteur de recherche 19 qui elle-même les transmet à un moteur de recherche 6 par exemple un moteur de recherche classique accessible par le réseau Internet 1.
L'interface 19 est en outre conçue pour recevoir les réponses fournies par le moteur de recherche 6 sous forme d'une liste qui est transmise au moteur de règle 16. Le moteur de règles peut alors extraire de la liste de réponses un seul nom de serveur en fonction de critères préétablis. Alternativement, le moteur de recherche utilisé peut être préalablement configuré pour ne fournir qu'une seule réponse.

La table d'alias 17 contient des mots abrégés, des noms ou des mots clés attribués à des serveurs, chaque nom ou mot étant associé à un nom de serveur. Si le moteur de règles 16 dispose d'un accès à une telle table, il est conçu pour extraire de la requête DNS non résolue un ou plusieurs mots à rechercher dans la table d'alias 17. La table d'alias est avantageusement conçue pour fournir une seule adresse pour un mot donné.
Typiquement, cette table permet aux utilisateurs d'accéder à des sites à l'aide de noms abrégés.

La table d'expressions régulières 18 établit une correspondance entre des adresses et des parties de mots. Si le moteur de règles 16 dispose d'un accès à une telle table, il est conçu pour rechercher si la table contient une partie de mot apparaissant dans le nom de serveur non résolu.

En outre, si le moteur de règles 15 a accès à plusieurs moyens de recherche 17, 18, 19, il est de préférence conçu pour faire appel à ces moyens de recherche dans un ordre prédéfini et à ne faire appel au moyen suivant que s'il n'a pas obtenu de réponse du moyen précédent. Ainsi, par exemple, la table d'alias 17 peut être utilisée en priorité, et si aucune adresse n'est obtenue, le moteur de règles 16 fait ensuite appel à la table d'expressions régulières 18, et si cette table ne fournit aucune réponse, le moteur de règles fait appel au moteur de recherche 6 par l'intermédiaire de l'interface 19.

Si le moteur de règles 16 obtient ainsi une adresse en tant que réponse, il la transmet au module d'analyse 15, afin de l'envoyer à au terminal d'utilisateur comme s'il s'agissait de l'adresse IP correspondant au nom de serveur fourni dans la requête de résolution DNS.

En outre, le système de redirection DNS 10 comprend avantageusement une interface DNS 11 mettant en oeuvre le protocole DNS pour communiquer avec les terminaux d'utilisateurs et avec des serveurs DNS 3, et en particulier pour émettre et recevoir des requêtes et des réponses DNS.

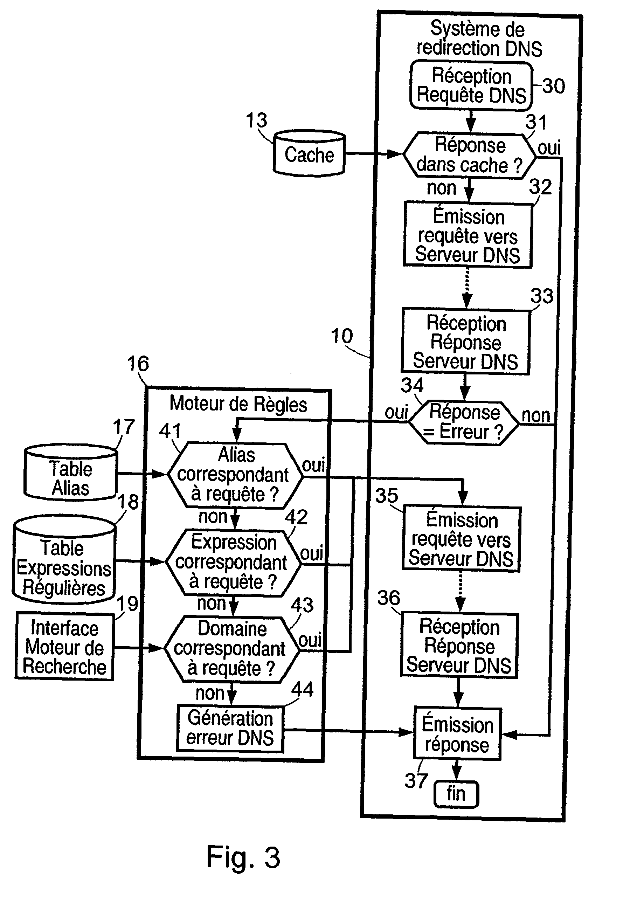

Lorsque le système de redirection 10 reçoit une requête DNS émise par le logiciel de navigation d'un terminal d'utilisateur 4, il exécute la procédure 30 représentée sur la figure 3. Cette procédure consiste à la première étape 31 à rechercher si la réponse à la requête se trouve déjà dans la mémoire cache 13. Si tel est le cas, la procédure passe directement à l'étape 37 consistant pour le serveur 12 à émettre vers le terminal 4 la réponse stockée dans la mémoire cache.
Dans le cas contraire, la requête est transmise au client 14 pour qu'il émette la requête vers un système de résolution DNS 3 (étape 33). La réponse DNS émise par le système 3 est reçue par le client 14 à l'étape suivante 34 qui la transmet au module d'analyse 15. A l'étape 34, le module d'analyse examine la réponse reçue par le client 14. Si cette réponse contient une adresse IP, elle est stockée dans la mémoire cache 13 et transmise au serveur 12 pour être envoyée au terminal (étape 37).

Si la réponse DNS obtenue indique une erreur de résolution, le module d'analyse fait appel au moteur de règles 16 en lui transmettant le nom de serveur contenu dans la requête DNS reçue du terminal.
A l'étape 41, le moteur de règles examine la table d'alias 17 pour déterminer si le nom de serveur reçu correspond à un alias mémorisé dans la table 17. Si aucun alias n'est trouvé, le moteur de règles examine la table d'expressions régulières 18 pour déterminer si une expression de la table correspond au nom de serveur (étape 42). Si aucune expression régulière n'est trouvée, le moteur de règles formule une requête de recherche sur la base du nom de serveur, qu'il transmet à l'interface de moteur de recherche 19 et attend la réponse (étape 43). Si l'interface 19 ne fournit aucune réponse, le moteur de règles génère un message d'erreur DNS qu'il transmet au module d'analyse (étape 44) pour être envoyé au terminal 4 par l'intermédiaire du serveur 12 à l'étape 37.

Si le moteur de règles 16 trouve un alias à l'étape 41, une expression régulière à l'étape 42 ou obtient une réponse du moteur de recherche à l'étape 43, il transmet au module d'analyse 15 l'adresse correspondant à l'alias ou l'expression régulière trouvée ou la réponse obtenue.

Grâce à ces dispositions, l'utilisateur peut introduire une phrase dans le champ adresse de son logiciel de navigation, et accéder à un site correspondant à la phrase qu'il a introduit.

Dans une première variante de l'invention, l'adresse obtenue dans la table d'alias 17, la table d'expressions régulières 18 ou par le moteur de recherche est une adresse IP. Dans ce cas, cette adresse est transmise à l'étape 37 à la mémoire cache 13 et au serveur 12 pour l'envoyer au terminal 4 émetteur de la requête correspondante.

Dans une autre variante de l'invention, l'adresse obtenue dans la table d'alias 17, la table d'expressions régulières 18 ou par le moteur de recherche est un nom DNS de serveur. Dans ce cas, le module d'analyse transmet le nom de serveur obtenu au client 14 pour effectuer une résolution DNS sur ce nom (étape 35). Il reçoit à l'étape 36 en tant que réponse une adresse IP qu'il transmet à l'étape 37 à la mémoire cache 13 et au serveur 12 pour l'envoyer au terminal 4.

Il s'avère que le système et le procédé qui viennent d'être décrits ne permettent pas de rediriger l'utilisateur à l'intérieur d'un site Web. En effet, la résolution DNS ne donne accès qu'à la racine du site Web et n'offre pas de visibilité sur la ressource demandée par l'utilisateur. Il en résulte que si l'on souhaite rediriger l'utilisateur vers une page particulière d'un site, le principe de redirection DNS qui vient d'être décrit est insuffisant. En outre, dans certaines configurations de connexion des terminaux d'utilisateurs, il existe des équipements HTTP placés en coupure (proxy, proxy-cache, Web accelerator) qui vérifient la validité des requêtes DNS des clients en effectuant eux-mêmes des résolutions DNS. Si ces équipements s'adressent à un autre système DNS que le système de redirection 10, l'utilisateur ne peut pas bénéficier du service de redirection.

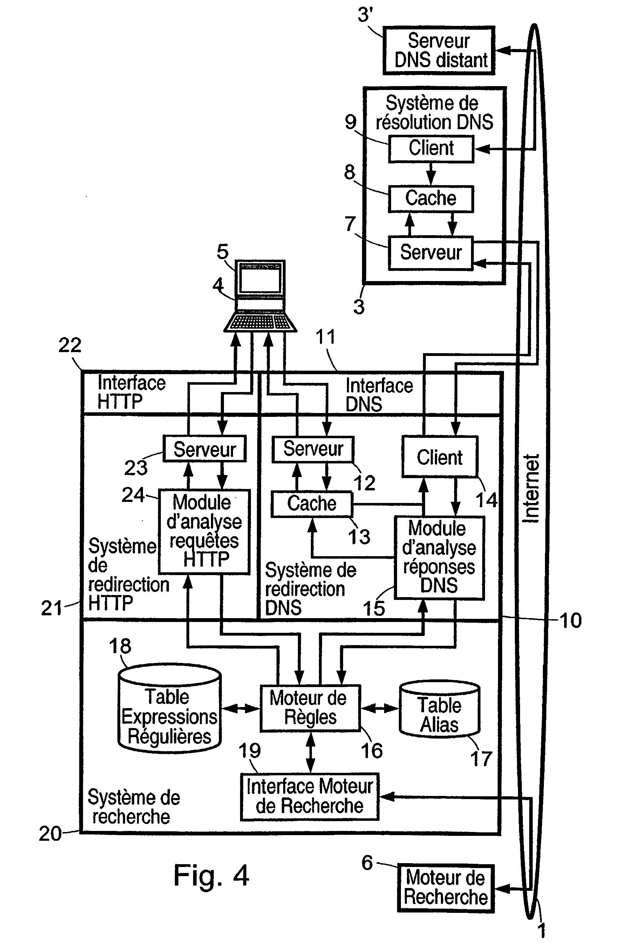

Pour résoudre ces problèmes, le système représenté sur la figure 2 est modifié conformément au système montré sur la figure 4. Par rapport à la figure 2, le système de redirection représenté sur la figure 4 comprend en outre un système de redirection HTTP 21 comportant une interface 22 implémentant le protocole HTTP pour recevoir et émettre des requêtes et des réponses HTTP, un serveur HTTP 23 conçu pour traiter les requêtes HTTP émises par les terminaux d'utilisateurs 4 et leur fournir des réponses, et un module d'analyse 24 des requêtes HTTP reçues, permettant de remplacer le cas échéant une réponse par un nouveau contenu. A cet effet, le module d'analyse 24 fait également appel au moteur de règles 16.

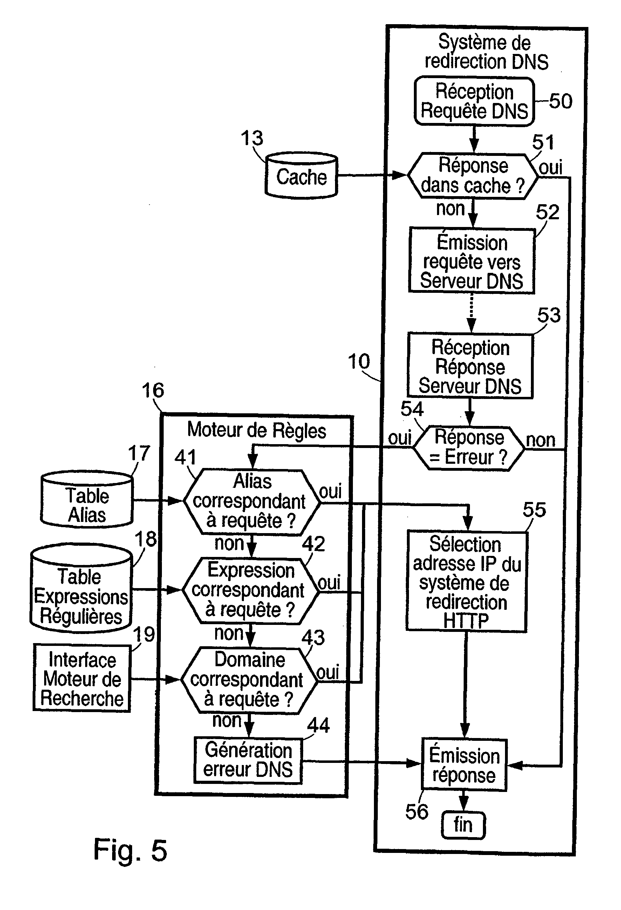

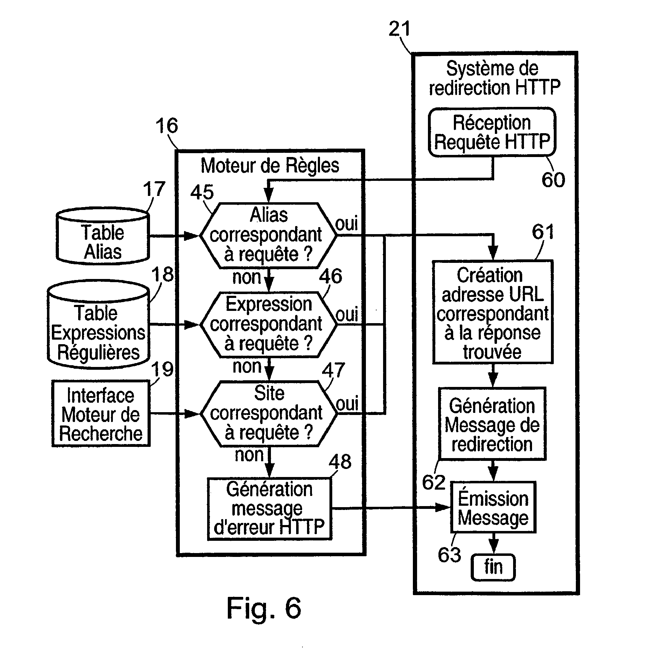

Le fonctionnement du système représenté sur la figure 4 est illustré par les figures 5 et 6. Lorsque l'utilisateur introduit une adresse URL dans son logiciel de navigation pour accéder à une ressource spécifique offerte par un serveur, par exemple une page d'un site Web, le navigateur extrait le nom de serveur de l'adresse URL introduite et lance une requête DNS afin d'obtenir l'adresse IP correspondante du site.

Comme précédemment, cette requête DNS déclenche l'exécution d'une procédure 50 par le système de redirection DNS 10, cette procédure comportant une première étape 51 consistant à rechercher si une réponse correspondant à la requête DNS reçue se trouve déjà dans la mémoire cache 13. Si telle est le cas, la réponse trouvée est transmise au terminal 4 à l'étape 56. Dans le cas contraire, le client DNS 14 transmet à l'étape 52 la requête à un serveur DNS 3 via l'interface DNS 11. La réponse du serveur 3 est reçue à l'étape 53 par le client 14 qui la transmet au module d'analyse des requêtes DNS 15 pour être analysée. Si la réponse reçue n'indique pas d'erreur (étape 54) mais contient une adresse IP correspondant au nom de serveur recherché, l'adresse IP obtenue est transmise au terminal 4 à l'étape 56.

Dans le cas contraire, la requête DNS est transmise au moteur de règles 16 qui examine comme précédemment, successivement la table d'alias 17 et si aucun alias n'est trouvé, la table d'expressions régulières 18, et si aucune expression régulière n'est trouvée, soumet une requête sur la base du nom de serveur contenu dans l'adresse URL au moteur de recherche 6 via l'interface 19. Si aucun nom de serveur n'est trouvé, le moteur de règles génère un message d'erreur DNS qui est transmis au terminal 4. Dans le cas contraire, le module d'analyse 15 fournit l'adresse IP du serveur HTTP 23 du système de redirection HTTP, et transmet cette adresse au serveur 12 pour l'envoyer vers le terminal d'utilisateur 4.

Le moteur de règles 16 est ainsi utilisé par le système de redirection DNS uniquement pour déterminer s'il peut trouver une adresse correspondant au nom de serveur contenu dans l'adresse URL fournie par l'utilisateur.

Il est à noter que dans la variante de l'invention illustrée par les figures 4 à 6, les tables 17 et 18 peuvent contenir des adresses URL incluant des sous-répertoires permettant d'accéder directement à des pages particulières d'un site Web.

Le logiciel de navigation qui reçoit l'adresse IP du serveur 23 accède à celui-ci en émettant une requête HTTP contenant l'adresse IP reçue, comme s'il se connectait au site Web demandé initialement par l'utilisateur, ce qui déclenche l'exécution par le système de redirection HTTP 21 de la procédure 60 illustrée par la figure 6.

Dans le cas où un sous-répertoire est mentionné dans l'adresse URL introduite par l'utilisateur à l'origine, le serveur HTTP 23 peut décider (en fonction des sites ou sur la base des expressions régulières 18 :
- soit de rajouter le sous-répertoire à la fin de la nouvelle adresse URL déterminée par le moteur de règles 16,
- soit de ne pas tenir compte de ce sous-répertoire dans la nouvelle adresse URL.

La requête HTTP reçue du terminal par le serveur 23 est transmise au module d'analyse 24 qui fait appel comme précédemment au moteur de règles 16 pour retrouver le nom de de serveur qui a été précédemment trouvé lors de l'exécution de la procédure 50. A cet effet, la procédure 60 comprend une étape 45 de recherche d'un alias correspondant à la requête HTTP dans la table d'alias 17, une étape 46 de recherche d'une expression régulière correspondant à la requête HTTP dans la table d'expressions régulières 18, et une étape 47 d'envoi d'une requête de recherche à un moteur de recherche 6. Si aucune adresse URL n'est trouvée au cours des étapes 45 à 47, le moteur de règles 16 génère à l'étape 48 un message d'erreur HTTP du type "404 - URL not found" (URL non trouvée) ou "503 - Service unavailable" (Service non disponible), qui est transmis par le module d'analyse 24 à l'étape 63 au serveur 23 pour être envoyé au terminal 4.

Il est à noter que normalement, si le terminal 4 accède au serveur HTTP 23, cela signifie qu'une adresse a été préalablement trouvée par le moteur de règles 16 lors de l'exécution de la procédure 50.

Si une adresse URL est trouvée au cours de l'une des étapes 45 à 47, le système de redirection génère à l'étape 62 un message de redirection HTTP contenant cette adresse URL, ce message étant transmis à l'étape 63 vers terminal 4. Ce message peut être de type "302 - Found" (trouvé) ou "303 - See Other" (voir autres), ces types de messages étant définis dans la norme HTTP. L'adresse URL qui est transmise au terminal 4 peut alors pointer vers une sous partie du site, ce qui n'est pas possible dans la procédure 30 décrite en référence à la figure 3.

Par ailleurs, dans le cas où le moteur de règles 16 a fait appel au moteur de recherche 6, deux cas sont à considérer : soit le moteur de recherche ne fournit qu'une seule adresse URL, soit il fournit une liste d'adresses URL.
S'il ne fournit qu'une seule adresse, cette adresse est transmise à l'étape 62 vers le terminal 4. S'il fournit une liste d'adresses, l'adresse transmise à l'étape 62 vers le terminal peut être soit l'adresse de la page Web du moteur de recherche contenant la liste d'adresses, soit une adresse sélectionnée dans la liste, par exemple la première apparaissant dans cette liste.

Le logiciel de navigation du terminal qui reçoit ainsi une telle adresse URL effectue à nouveau une résolution DNS en émettant une requête DNS afin d'obtenir l'adresse IP correspondant au nom de serveur contenu dans l'adresse URL reçue. A la réception de l'adresse IP correspondante, le logiciel de navigation accède à la page du site correspondant à l'adresse URL reçue.

Le système représenté sur la figure 4 permet donc de rediriger un utilisateur directement sur une ressource spécifique d'un site Internet en fonction d'un nom de serveur demandé, et de s'affranchir des difficultés techniques pouvant survenir dans le cadre d'une redirection DNS si un serveur proxy se trouve entre le terminal 4 et le serveur vers lequel l'utilisateur est redirigé.

## Revendications

1. Procédé de traitement de requêtes de résolution de nom de serveur, émises par des terminaux (4) d'utilisateurs pour accéder à des ressources mises à disposition par un serveur (2) par l'intermédiaire d'un réseau de transmission de données (1) basé sur le protocole IP, les requêtes de résolution contenant un nom de serveur, et visant à obtenir d'un serveur de résolution (3) une adresse IP correspondante permettant d'accéder au serveur (2),
ledit procédé comprenant les étapes consistant à :
- intercepter des requêtes de résolution émises par des terminaux d'utilisateurs, et les réémettre vers le serveur de résolution (3),
- recevoir et analyser des réponses aux requêtes de résolution, fournies par le serveur de résolution, et
- lorsque l'une des réponses aux requêtes de résolution indique qu'aucune adresse IP ne correspond au nom de serveur fourni dans la requête correspondante, rechercher dans au moins une liste (17, 18, 6) en fonction d'au moins une partie du nom de serveur contenu dans la requête de résolution, une adresse URL d'un serveur alternatif (2),
**caractérisé en ce que** si au moins une adresse URL de serveur alternatif (2) est trouvée dans la liste (17, 18, 6), ledit procédé comprend en outre les étapes consistant à :
- transmettre au terminal (4) l'adresse IP d'un serveur HTTP (23),
- en réponse, recevoir en provenance du terminal une requête d'accès au serveur HTTP,
- rechercher par le serveur HTTP l'adresse URL de serveur alternatif préalablement trouvée, et
- transmettre en réponse au terminal l'adresse URL de serveur alternatif (2) trouvée afin d'effectuer une résolution DNS à partir de ladite adresse URL transmise.

2. Procédé selon la revendication 1, **caractérisé en ce que** l'une (17) des listes (17, 18, 6) où sont recherchées des adresses de serveurs alternatifs met en correspondance des mots clés et des adresses URL de serveurs alternatifs, une adresse URL de serveur alternatif étant sélectionnée si le mot clé correspondant se trouve dans le nom de serveur fourni dans la requête.

3. Procédé selon la revendication 1 ou 2, **caractérisé en ce que** l'une (18) des listes (17, 18, 6) où sont recherchées des adresses URL de serveurs alternatifs met en correspondance des parties de mots et des adresses URL de serveurs alternatifs, une adresse de serveur alternatif étant sélectionnée si la partie de mot correspondante se trouve dans l'adresse URL fournie dans la requête.

4. Procédé selon l'une des revendications 1 à 3, **caractérisé en ce que** l'étape de recherche dans au moins une liste comprend l'émission d'une requête de recherche vers un moteur de recherche (6), contenant un critère défini sur la base du nom de serveur fourni dans la requête de résolution.

5. Procédé selon l'une des revendications 1 à 4, **caractérisé en ce que** l'adresse URL de serveur alternatif trouvée inclut la définition d'un sous-répertoire permettant d'accéder directement à une ressource spécifique fournie par le serveur alternatif.

6. Procédé selon la revendication 5, **caractérisé en ce que** la page Web diffusée par le serveur alternatif est une page de résultats de recherche fournie par un moteur de recherche (6) accessible par le réseau (1).

7. Système de traitement de requêtes de résolution de nom de serveur, émises par des terminaux (4) d'utilisateurs pour accéder à des ressources mises à disposition par un serveur (2) par l'intermédiaire d'un réseau de transmission de données (1) basé sur le protocole IP, les requêtes de résolution comportant un nom de serveur, et visant à obtenir d'un serveur de résolution (3) une adresse IP correspondante permettant d'accéder au serveur (2),
ledit système comprenant :
- des moyens pour recevoir des terminaux d'utilisateurs (4) des requêtes de résolution émises par des terminaux d'utilisateurs, et les réémettre vers le serveur de résolution (3),
- des moyens pour recevoir et analyser des réponses aux requêtes de résolution, fournies par le serveur de résolution, et
- des moyens pour rechercher dans au moins une liste (17, 18, 6) en fonction d'au moins une partie du nom de serveur contenu dans la requête de résolution, une adresse URL d'un serveur alternatif (2), lorsque l'une des réponses aux requêtes de résolution indique qu'aucune adresse IP ne correspond au nom de serveur fourni dans la requête correspondante,
**caractérisé en ce qu'**il comprend en outre :
- un serveur HTTP (23),
- des moyens pour transmettre au terminal (4) l'adresse IP du serveur HTTP si au moins une adresse URL de serveur alternatif (2) est trouvée dans une liste (17, 18, 6),
- des moyens pour rechercher l'adresse URL de serveur alternatif préalablement trouvée, à la suite de la réception d'une requête d'accès au serveur HTTP émise par le terminal (4), et
- des moyens pour transmettre l'adresse URL de serveur alternatif trouvée au terminal afin d'effectuer une résolution DNS à partir de ladite adresse URL transmise.

8. Système selon la revendication 7, **caractérisé en ce qu'**il est conçu sous la forme d'un serveur DNS.

9. Système selon la revendication 7, **caractérisé en ce qu'**il est intégré dans un serveur proxy.

10. Système selon l'une des revendications 7 à 9, **caractérisé en ce qu'**il comprend une mémoire cache (13) pour stocker temporairement les réponses reçues aux requêtes de résolution.

11. Système selon l'une des revendications 7 à 10, **caractérisé en ce que** l'une (17) des listes (17, 18, 6) d'adresses de serveurs alternatifs met en correspondance des mots clés et des adresses URL de serveurs alternatifs, une adresse URL de serveur alternatif étant sélectionnée si le mot clé correspondant se trouve dans le nom de serveur fourni dans la requête de résolution.

12. Système selon l'une des revendications 7 à 11, **caractérisé en ce que** l'une (18) des listes (17, 18, 6) d'adresses de serveurs alternatifs met en correspondance des parties de mots et des adresses URL de serveurs alternatifs, une adresse URL de serveur alternatif étant sélectionnée si la partie de mot correspondante se trouve dans le nom de serveur fourni dans la requête de résolution.

13. Système selon l'une des revendications 7 à 12, **caractérisé en ce qu'**il comprend des moyens pour émettre une requête de recherche vers un moteur de recherche (6), contenant un critère défini sur la base du nom de serveur fourni dans la requête de résolution.

14. Système selon l'une des revendications 7 à 13, **caractérisé en ce que** l'adresse URL de serveur alternatif (2) trouvée inclut la définition d'un sous-répertoire permettant d'accéder directement à une ressource spécifique fournie par le serveur alternatif.

## Claims

1. Method for processing server name resolution requests transmitted by user terminals (4) in order to access resources provided by a server (2) via a data transmission network (1) based on the IP protocol, the resolution requests containing a server name, and aiming to obtain from a resolution server (3) a corresponding IP address making it possible to access the server (2),
said method comprising the steps consisting in:
- intercepting resolution requests transmitted by user terminals, and forwarding them to the resolution server (3),
- receiving and analyzing responses to the resolution requests provided by the resolution server,
and
- when one of the responses to the resolution requests indicates that no IP address corresponds to the server name supplied in the corresponding request, searching in at least one list (17, 18, 6), as a function of at least one portion of the server name contained in the resolution request, for a URL address of an alternative server (2),
**characterized in that**, if at least one URL address of an alternative server (2) is found in the list (17, 18, 6), said method also comprises the steps consisting in:
- transmitting to the terminal (4) the IP address of an HTTP server (23),
- in response, receiving from the terminal a request for access to the HTTP server,
- searching, by the HTTP server, for the previously found alternative server URL address, and
- transmitting in response to the terminal the found URL address of an alternative server (2) in order to carry out a DNS resolution based on said transmitted URL address.

2. Method according to Claim 1, **characterized in that** one (17) of the lists (17, 18, 6) in which alternative server addresses are sought matches key words and alternative server URL addresses, an alternative server URL address being selected if the corresponding key word is found in the server name supplied in the request.

3. Method according to Claim 1 or 2, **characterized in that** one (18) of the lists (17, 18, 6) in which alternative server URL addresses are sought matches portions of words and alternative server URL addresses, an alternative server address being selected if the corresponding portion of word is found in the URL address supplied in the request.

4. Method according to one of Claims 1 to 3, **characterized in that** the step of searching in at least one list comprises the transmission of a search request to a search engine (6), containing a criterion defined on the basis of the server name supplied in the resolution request.

5. Method according to one of Claims 1 to 4, **characterized in that** the alternative server URL address that has been found includes the definition of a subdirectory making it possible to directly access a specific resource supplied by the alternative server.

6. Method according to Claim 5, **characterized in that** the web page broadcast by the alternative server is a search results page supplied by a search engine (6) that can be accessed via the network (1).

7. System for processing server name resolution requests transmitted by user terminals (4) in order to access resources provided by a server (2) via a data transmission network (1) based on the IP protocol, the resolution requests containing a server name, and aiming to obtain from a resolution server (3) a corresponding IP address making it possible to access the server (2),
said system comprising:
- means for receiving from the user terminals (4) the resolution requests transmitted by user terminals,
and for forwarding them to the resolution server (3),
- means for receiving and analyzing responses to the resolution requests supplied by the resolution server,
and
- means for searching in at least one list (17, 18, 6), as a function of at least one portion of the server name contained in the resolution request, for a URL address of an alternative server (2), when one of the responses to the resolution requests indicates that no IP address corresponds to the server name supplied in the corresponding request,
**characterized in that** it also comprises:
- an HTTP server (23),
- means for transmitting to the terminal (4) the IP address of the HTTP server if at least one URL address of an alternative server (2) is found in a list (17, 18, 6),
- means for searching for the alternative server URL address that has been previously found, following receipt of an HTTP server access request transmitted by the terminal (4), and
- means for transmitting the alternative server URL address that has been found to the terminal in order to carry out a DNS resolution based on said transmitted URL address.

8. System according to Claim 7, **characterized in that** it is designed in the form of a DNS server.

9. System according to Claim 7, **characterized in that** it is incorporated into a proxy server.

10. System according to one of Claims 7 to 9, **characterized in that** it comprises a cache memory (13) in order to temporarily store the responses received to the resolution requests.

11. System according to one of Claims 7 to 10, **characterized in that** one (17) of the lists (17, 18, 6) of alternative server addresses matches key words and alternative server URL addresses, an alternative server URL address being selected if the corresponding key word is found in the server name supplied in the resolution request.

12. System according to one of Claims 7 to 11, **characterized in that** one (18) of the lists (17, 18, 6) of alternative server addresses matches portions of words and alternative server URL addresses, an alternative server URL address being selected if the corresponding portion of word is found in the server name supplied in the resolution request.

13. System according to one of Claims 7 to 12, **characterized in that** it comprises means for transmitting a search request to a search engine (6), containing a criterion defined on the basis of the server name supplied in the resolution request.

14. System according to one of Claims 7 to 13, **characterized in that** the found URL address of the alternative server (2) includes the definition of a subdirectory making it possible to directly access a specific resource supplied by the alternative server.

## Patentansprüche

1. Verfahren zur Verarbeitung von Servernamen-Auflösungsanfragen, die von Benutzerendgeräten (4) gesendet werden, um auf Ressourcen zuzugreifen, die durch einen Server (2) über ein Datenübertragungsnetz (1) zur Verfügung gestellt werden, das auf dem IP-Protokoll basiert, wobei die Auflösungsanfragen einen Servernamen enthalten und darauf abzielen, von einem Auflösungsserver (3) eine entsprechende IP-Adresse zu erhalten, die das Zugreifen auf den Server (2) ermöglicht,
wobei das Verfahren die Schritte umfasst, die aus Folgendem bestehen:
- Abfangen von durch Benutzerendgeräte gesendeten Auflösungsanfragen und ihr Weitersenden zum Auflösungsserver (3),
- Empfangen und Analysieren von durch den Auflösungsserver gelieferten Antworten auf die Auflösungsanfragen, und
- wenn die eine der Antworten auf die Auflösungsanfragen anzeigt, dass keine IP-Adresse dem in der entsprechenden Anfrage gelieferten Servernamen entspricht, Suchen einer URL-Adresse eines alternativen Servers (2) in mindestens einer Liste (17, 18, 6) gemäß mindestens einem Teil des in der Auflösungsanfrage enthaltenen Servernamens,
**dadurch gekennzeichnet, dass** das Verfahren, wenn mindestens eine URL-Adresse eines alternativen Servers (2) in der Liste (17, 18, 6) gefunden wird, ferner die Schritte umfasst, die aus Folgendem bestehen:
- Senden der IP-Adresse eines HTTP-Servers (23) an das Endgerät (4),
- als Reaktion darauf, Empfangen einer Anfrage zum Zugriff auf den HTTP-Server vom Endgerät,
- Suchen der vorhergehend gefundenen URL-Adresse des alternativen Servers durch den HTTP-Server, und
- als Reaktion darauf, Übertragen der gefundenen URL-Adresse des alternativen Servers (2) an das Endgerät, um anhand der übertragenen URL-Adresse eine DNS-Auflösung durchzuführen.

2. Verfahren nach Anspruch 1, **dadurch gekennzeichnet, dass** die eine (17) der Listen (17, 18, 6), in der die Adressen alternativer Server gesucht werden, Schlüsselwörter und URL-Adressen von alternativen Servern abgleicht, wobei eine URL-Adresse eines alternativen Servers ausgewählt wird, wenn das Schlüsselwort im in der Anfrage gelieferten Servernamen enthalten ist.

3. Verfahren nach Anspruch 1 oder 2, **dadurch gekennzeichnet, dass** die eine (18) der Listen (17, 18, 6), in der URL-Adressen alternativer Server gesucht werden, Teile von Wörtern und URL-Adressen alternativer Server abgleicht, wobei eine Adresse eines alternativen Servers ausgewählt wird, wenn der entsprechende Teil des Wortes in der in der Anfrage gelieferten URL-Adresse enthalten ist.

4. Verfahren nach einem der Ansprüche 1 bis 3, **dadurch gekennzeichnet, dass** der Schritt der Suche in mindestens einer Liste das Senden einer Suchanfrage, die ein Kriterium enthält, das auf der Grundlage des in der Auflösungsanfrage gelieferten Servernamens definiert ist, an eine Suchmaschine (6) umfasst.

5. Verfahren nach einem der Ansprüche 1 bis 4, **dadurch gekennzeichnet, dass** die gefundene URL-Adresse des alternativen Servers die Definition eines Unterverzeichnisses enthält, das das direkte Zugreifen auf eine spezifische, durch den alternativen Server gelieferte Ressource ermöglicht.

6. Verfahren nach Anspruch 5, **dadurch gekennzeichnet, dass** die durch den alternativen Server verbreitete Webseite eine Suchergebnisseite ist, die durch eine Suchmaschine (6) geliefert wird, auf die über das Netz (1) zugegriffen werden kann.

7. System zur Verarbeitung von Servernamen-Auflösungsanfragen, die von Benutzerendgeräten (4) gesendet werden, um auf Ressourcen zuzugreifen, die durch einen Server (2) über ein Datenübertragungsnetz (1) zur Verfügung gestellt werden, das auf dem IP-Protokoll basiert, wobei die Auflösungsanfragen einen Servernamen enthalten und darauf abzielen, von einem Auflösungsserver (3) eine entsprechende IP-Adresse zu erhalten, die das Zugreifen auf den Server (2) ermöglicht, wobei das System Folgendes umfasst:
- Mittel zum Empfangen von durch Benutzerendgeräte gesendeten Auflösungsanfragen von den Benutzerendgeräten (4) und für ihr Weitersenden an den Auflösungsserver (3),
- Mittel zum Empfangen und Analysieren der durch den Auflösungsserver gelieferten Antworten auf die Auflösungsanfragen, und
- Mittel zum Suchen einer URL-Adresse eines alternativen Servers (2) gemäß mindestens einem Teil des in der Auflösungsanfrage enthaltenen Servernamens in mindestens einer Liste (17, 18, 6), wenn die eine der Antworten auf die Auflösungsanfragen anzeigt, dass keine IP-Adresse dem in der entsprechenden Anfrage gelieferten Servernamen entspricht,
**dadurch gekennzeichnet, dass** es ferner Folgendes umfasst:
- einen HTTP-Server (23),
- Mittel zum Übertragen der IP-Adresse des HTTP-Servers an das Endgerät (4), wenn mindestens eine URL-Adresse eines alternativen Servers (2) in einer Liste (17, 18, 6) gefunden wird,
- Mittel zum Suchen der vorhergehend gefundenen URL-Adresse eines alternativen Servers infolge des Empfangs einer durch das Endgerät (4) gesendeten Anfrage zum Zugriff auf den HTTP-Server, und
- Mittel zum Übertragen der gefundenen URL-Adresse eines alternativen Servers an das Endgerät, um anhand der übertragenen URL-Adresse eine DNS-Auflösung durchzuführen.

8. System nach Anspruch 7, **dadurch gekennzeichnet, dass** es in der Form eines DNS-Servers aufgebaut ist.

9. System nach Anspruch 7, **dadurch gekennzeichnet, dass** es in einen Proxy-Server integriert ist.

10. System nach einem der Ansprüche 7 bis 9, **dadurch gekennzeichnet, dass** es einen Cache-Speicher (13) zum vorübergehenden Speichern der auf die Auflösungsanfragen erhaltenen Antworten umfasst.

11. System nach einem der Ansprüche 7 bis 10, **dadurch gekennzeichnet, dass** die eine (17) der Listen (17, 18, 6) von Adressen alternativer Server Schlüsselwörter und URL-Adressen von alternativen Servern abgleicht, wobei eine URL-Adresse eines alternativen Servers ausgewählt wird, wenn das entsprechende Schlüsselwort im in der Auflösungsanfrage gelieferten Servernamen enthalten ist.

12. System nach einem der Ansprüche 7 bis 11, **dadurch gekennzeichnet, dass** die eine (18) der Listen (17, 18, 6) von Adressen alternativer Server Teile von Wörtern und URL-Adressen alternativer Server abgleicht, wobei eine URL-Adresse eines alternativen Servers ausgewählt wird, wenn der entsprechende Teil des Wortes im in der Auflösungsanfrage gelieferten Servernamen enthalten ist.

13. System nach einem der Ansprüche 7 bis 12, **dadurch gekennzeichnet, dass** es Mittel zum Senden einer Suchanfrage, die ein Kriterium enthält, das auf der Grundlage des in der Auflösungsanfrage gelieferten Servernamens definiert ist, an eine Suchmaschine (6) umfasst.

14. System nach einem der Ansprüche 7 bis 13, **dadurch gekennzeichnet, dass** die gefundene URL-Adresse des alternativen Servers (2) die Definition eines Unterverzeichnisses enthält, das das direkte Zugreifen auf eine spezifische, durch den alternativen Server gelieferte Ressource ermöglicht.
